# EUROPEAN PATENT SPECIFICATION

(11) **EP 1 475 318 B1**
(45) Date of publication and mention of the grant of the patent: **02.08.2006**
(21) Application number: 04010170.1
(22) Date of filing: 29.04.2004
(51) Int. Cl.: B65D 90/58, B65G 53/46, F16K 3/08

(54) **GATE-TYPE CHECKING DEVICE, PARTICULARLY FOR GRANULAR PLASTICS MATERIALS**
ABSPERRSCHIEBER FÜR KUNSTSTOFFGRANULAT
VANNE D'ARRET POUR MATIERE PLASTIQUE GRANULAIRE

(30) Priority: 05.05.2003 IT vr20030052
(43) Date of publication of application: 10.11.2004
(73) Proprietor: Moretto Plastics Automation Srl, 35010 Massanzago (Padova) (IT)
(72) Inventor: Moretto, Renato, 35010 Massanzago (Padova) (IT)
(74) Representative: Reniero, Cirillo Silvano

(56) References cited:
- DE-A- 1 550 139
- DE-B- 1 103 850
- US-A- 1 617 503
- US-A- 3 198 482
- US-A- 5 667 198
- US-A- 5 836 336
- US-A- 5 873 562
- PATENT ABSTRACTS OF JAPAN vol. 1996, no. 09, 30 September 1996 (1996-09-30) -& JP 08 131050 A (KIORITZ CORP), 28 May 1996 (1996-05-28)

## Description

The present invention relates to a gate-type checking device, particularly suitable for granular plastics materials.

In the field of plastics material processing, the need is felt to provide stored heaps of granular plastics materials, and to displace the whole or parts of the materials that have accumulated through various processing and preparation steps. In order to carry out these operations, gate-type checking means are used, briefly referred to as gates, that have the function of opening and closing a column of granular plastics material fed from a storage area or container in order to control the supply thereof.

Commonly used gates are referred to as being of the guillotin type because they consist of a blade that closes a duct through which the material flows by sliding within a groove.

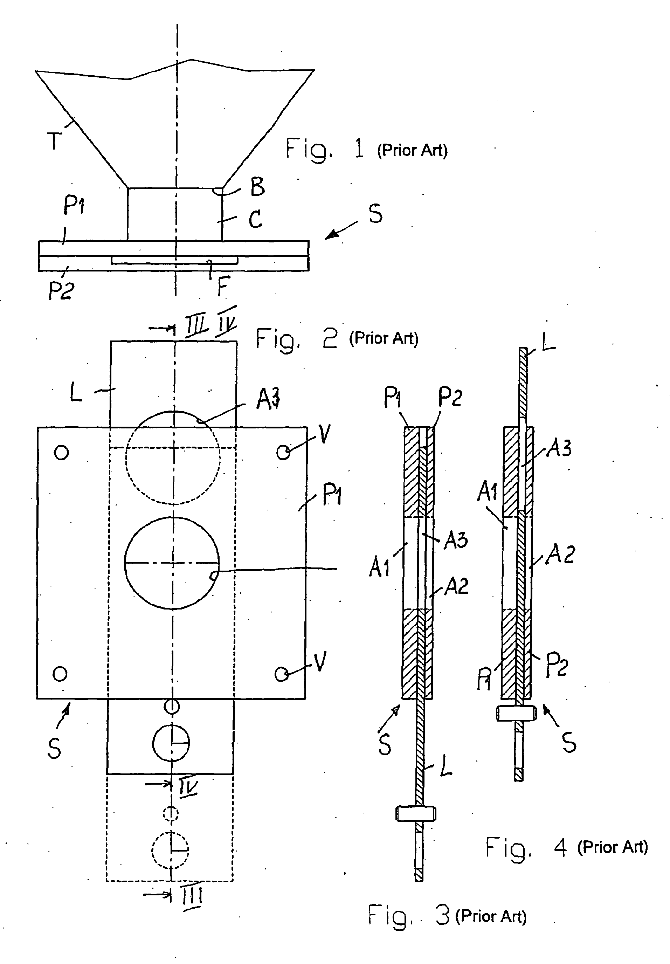

A type of gate of the guillotine type is shown in Figures 1, 2, 3 and 4 of the accompanying drawing. A gate, generally designated at S, is designed to open and close a duct C in communication with discharge outlet B of a hopper or silo T and consists of a gate body formed with e.g. a pair of plate-like elements P1 and P2 in abutment against one another and held together e.g. by a number of screws V.

One of the plate-like elements, e.g. element P2, is formed with a groove or milling F at the face thereof matching with the other plate-like element. In one direction, milling F extends normal to duct C, i.e. normal to the direction in which the granular material flows through duct C. At a predetermined position, usually the central axial position, of milling F, a through hole or opening A2 is provided, having a light smaller than the width of the groove or milling F.

Milling F functions as a receiving and guiding seat for the backward and forward sliding of a rigid blade L whose length is much greater than groove F, so that, in use, it is substantially engaged at all times. Blade L is formed with a through-hole or through-opening A3, whose light is the same as that of through hole A1.

The other plate-like element, i.e. element P1, is formed with a through-hole or opening A1, whose light is the same as opening A2, and arranged so that, in use, it is aligned with opening A2 at all times. Blade L is designed to slide upon control exerted by a linear actuator, such as an air-operated jack, not shown, along groove F, so that it is displaced from a closing position, at which it obstructs the granular material flowing through duct C (Fig. 4), and a predetermined opening position, at which through-hole A3 matches with holes A1 and A2 (Fig. 3) to allow the granular material to flow.

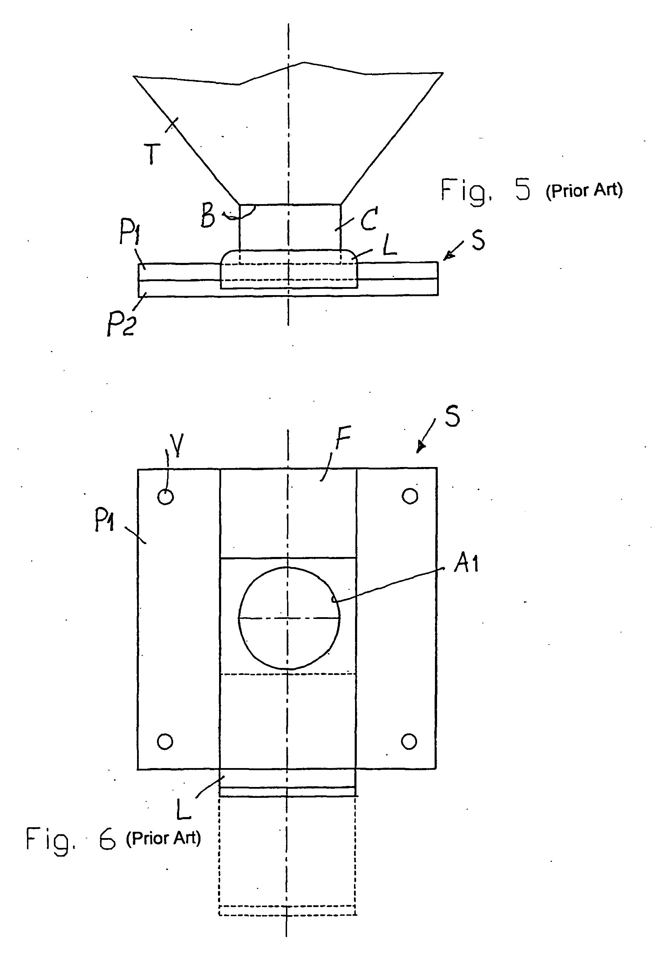

Another widely used type of gate is shown in Figs. 5 and 6 and consists of a gate body very similar to that of the gate shown in Figs. 1 to 4, but having a rigid blade or plate L1 shorter than the length of the groove and milling F, and without any through-hole A3. The interposition of such a blade between holes A1 and A2 of the lock-gate obstructs the material flow, whereas as the blade is displaced far from the holes the passage results in being opened up. However, once the portion of groove F is cleared by blade L1, e.g., referring to Fig. 6, as the blade is withdrawn, granules of material can linger in the groove itself, particularly in the area surrounding opening A2, therefore, as it is displaced so as to be brought increasingly nearer holes A1 and A2, blade L1 drags, breaks and compacts granules of material lingering along the groove or milling F, material that quickly ends up causing blade L1 to jam, thus preventing its displacement. Furthermore, the material lingering in the groove, in case the type of granular material flowing through the gate is changed, is for the new material an undesired source of contamination.

DE-B-1103850 discloses a gate-type device comprising two facing metal plates, a spacer between the metal plates, two sealing plates between the spacer and the two metal plates, and a sector gate member arranged to be angularly displaced in a seat defined by the spacer and the metal plates.

A main object of the present invention is to provide a gate-type checking device for controllably and effectively obstructing a flow of granules of plastics material from a storage area or container through a duct without jamming.

Another object of the present invention is to provide a gate-type checking device that is capable of preventing granules from accumulating and lingering therewithin, so that the danger of contamination is ruled out in case the type of granular material to be obstructed is changed.

Another object of the present invention is to provide a gate-type closing device capable of preventing the granules of material to be obstructed from being crushed or broken to pieces, whilst accomplishing an optimal obstruction of the flow.

Another important object of the present invention is to provide a gate-type checking device that is capable of minimizing the effort required to drive the blade forming the gate.

A further object of the present invention is to provide a one-gate checking device with a very simple structure, thus entailing a competitive production cost.

These and still other objects, that will be more clearly apparent below, are accomplished by a gate-type checking device for granular plastics material, which device has a pair of plate-like elements, each having a through opening, fixing means for keeping said plate-like elements in contact with one another at one matching face thereof, whereby their respective through openings being in alignment with each other, a receiving seat provided in at least one of said plate-like elements at its face matching with the other plate-like element, and at its through opening, a gate-type member designed to be arranged in said receiving seat, and articulation means having its center of articulation located between at least one of said plate-like elements and said gate-like member, so that said gate-type member is designed to be angularly displaced, in use, between a closing position, at which it obstructs said through openings and an opening position far from said openings, characterized in that said receiving seat and said gate-type member
- delimit an interspace) therebetween when said gate-type member is in its closing position, said gap being small enough to ensure that the flow of granular material is blocked, and wide enough to prevent any granules trapped therein from being crushed, and
- have a profile comprising at least two circular portions having its center at said articulation means, circular portion being arranged to slide close to said circular portion, whereas said circular portion is arranged to slide close to said circular portion, said circular portions of said gate-type member having
   - a semicircular lobe or portion therebetween which is designed to obstruct said through openings provided in said plates when said gate-type member is in its closing position,
   - a step provided between circular portion and a semicircular portion in said gate-type member, and
   - a shoulder provided between said circular shaped portions,
thereby sweeping away, in use, any clustering of granular material when said gate-like member is angularly displaced to its closing position.

Further aspects and advantages of the present invention will be better apparent from the following detailed description of one embodiment thereof, illustrated by way of non-limiting example by the accompanying Figures of drawing, in which:
Figure 1 is a diagrammatic partial front elevation view of a storage hopper or silo for storage of granular material, and of a lower discharge duct provided with a gate-type opening and closing device of a conventional type to check the granular material flowing through it;
Figure 2 shows a top plan view of the gate-type closing device shown in Fig. 1;
Figure 3 is a section view taken along line III-III of Fig. 2;
Figure 4 is a section view taken along line IV-IV of Fig. 2;
Figure 5 is a view similar to that of Fig. 1, but relating to another type of gate-type opening and closing device known in the art;
Figure 6 shows a top plan view of the gate-type opening and closing device shown in Fig. 5;
Figure 7 is a partly perspective view of a gate-type checking device according to the invention, shown with its gate-type element in its closed position; and
Figure 8 shows a view similar to that of Fig. 7, but with its gate-type element in its open position; and
Figure 9 is a perspective view similar to hat shown in Fig. 7 but illustrating a variation of the gate-type checking device with its gate-type member in its open position.

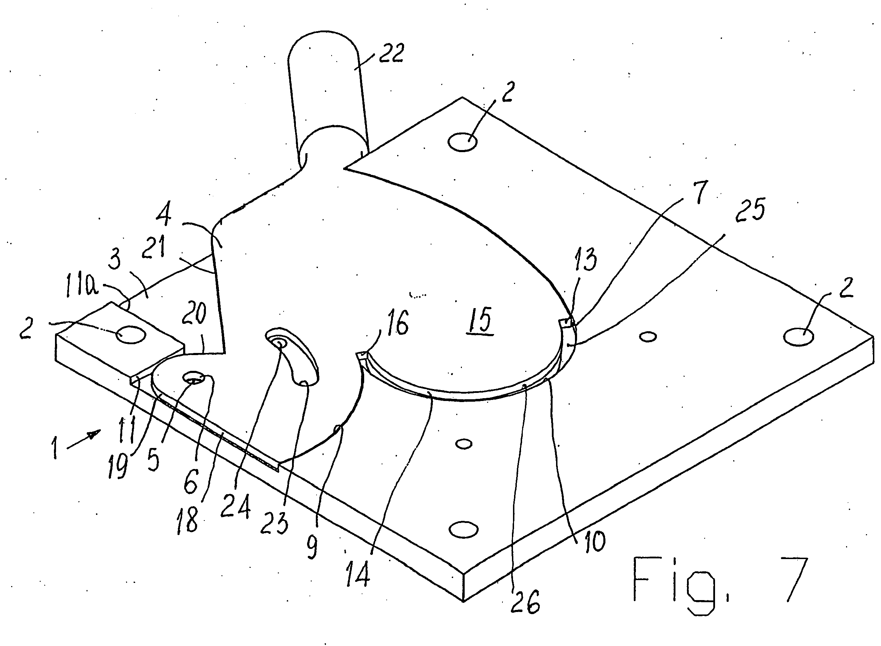

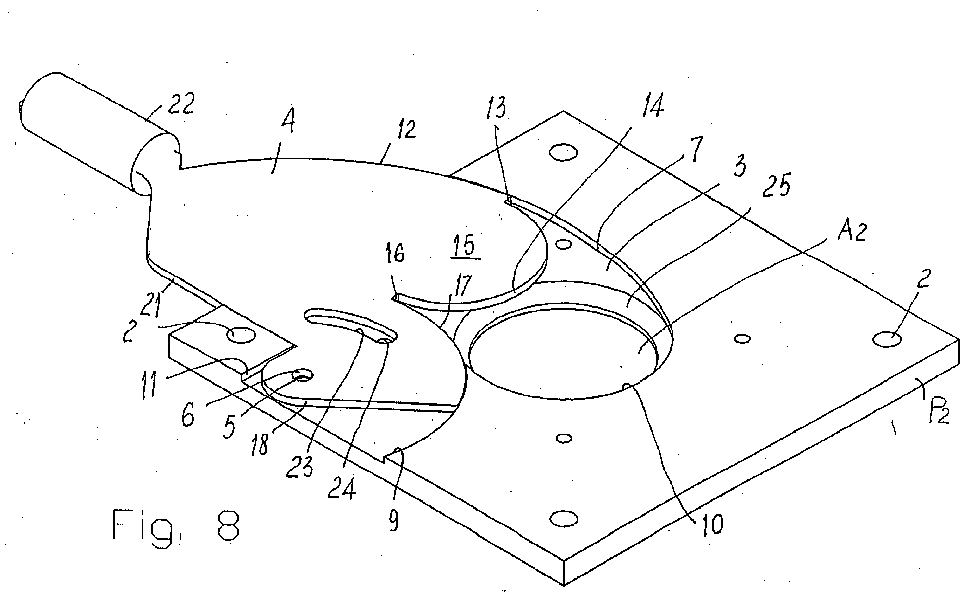

With reference first of all to Figures 7 and 8, it will be noted that even a gate-type checking device according to the present invention, generally designated at 1, is formed with a pair of plates P1 (not shown in Figs. 7 and 8) and P2, each having a through opening or hole A1 and A2, respectively, and with fixing means, e.g. four screws (not shown) designed to be threadably fitted into respective threaded holes 2 provided at the corners of plates P1 and P2 to keep the plates themselves in abutment with each other at a matching face thereof, so that their respective through openings or holes are in alignment with each other.

At the matching face of one plate with the other and at its through opening, or else partly in one, and partly in the other plate, a flat receiving seat 3 is provided, e.g. formed by milling, for receiving a gate-type substantially rigid planar blade 4.

Unlike in traditional apparatuses, blade 4 is provided with articulating means that, in the embodiment shown in Figs. 7 and 8, consist of a pin 5 rising from, and normal to, the bottom of planar seat 3 to be slidingly engaged with a hole 6 blade 4 is formed with, so that blade 4 can effect angular displacements about pin 5 between a closing position shown in Fig. 7, at which it obstructs the through openings A1 and A2, and an opening position shown in Fig. 8, far from the openings themselves, to allow the granular material to flow through them.

More in particular, receiving seat 3 is so shaped that it is designed to have a first edge wall 7, and a second edge wall 9, each forming a circular portion centred about the longitudinal axis of pin 5. Between circular portions 7 and 9, a circular portion 10 is provided, having substantially the same diameter as, or a slightly greater diameter than, hole A2. Moreover, close to pin 5, seat 3 has two straight edge wall portions 11 and 11 a, further normal to each other.

Planar blade 4 has a respective edge comprising a first circular portion 12 centred about the axis of hole 6, next to which a step 13 is provided, from which a semicircular portion 14 extends, whose diameter is substantially the same as opening or hole A2 and delimiting a protruding portion or lobe 15 forming the gate itself and having a circular profile. A small shoulder 16, provided next to the semicircular portion 14, is preferably parallel to step 13 and from this a second circularly shaped portion 17 extends, that is centred about the axis of hole 6, whose radius is significantly shorter than first portion 13. Peripheral portion 17 is designed to slide, in use, close to and along section 9 of the edge wall, whereas section 12 slides close to portion 7 of the edge wall.

Next to portion 17 a straight section 18 extends and partly delimits appendix 19 having an end connected to a radial portion 20 close to straight portion 11. A straight edge section 21 extends next to this and is designed to abut against the rectilinear portion 11 a of the wall of seat 3. Portions 12 and 21 extend outside plates P1 and P2 forming a tang 22 that can act as a handle for manually actuating blade 4, or else as an articulated connection element to a linear actuator, such as a cylinder and piston fluid dynamic unit, or another suitable driving device.

On the other hand, appendix 19 is formed with an articulation hole 6, and optionally a curved slot 23 acting as a guide for a small pin or stop 24 rising from the bottom of seat 3, such as pin 5 and functioning as a stop for the angular displacements of blade 4. If so desired, stop 24 can be replaced with a through screw designed to contribute to securing the two plates P1 and P2 to one another. The stop for the blade's angular displacements is also secured by section 21 that abuts against portion 11 a of the seat (3)'s wall, and by section 20 that abuts against portion 11 of the seat (3)'s wall.

Edge portions 12, 13, 14, 16 and 17 of blade 4 are designed, in use, to sweep away any clustering of granular material at the areas close to wall portions 7 and 9 of seat 3. Jamming of conventional gate-type devices is usually caused by granules falling into, thus obstructing, the blade's or shutter's sliding path. According to the present invention, the problem is solved by means of curved profiles 13, 14, 16 and 17 of the blade, that, upon being displaced flush both with the bottom and the walls of seat 3, sweep away any clustering of granular material, thus ensuring a sufficient degree of clearing, thus preventing jamming.

Being capable of preventing clustering within the gate by taking these measures makes it possible to limit most effectively the interventions, and thus the disassembling operations, for cleaning the inner parts of the gate that must be normally carried out upon changing the material to remove any traces of previously used material so as to prevent contamination.

Furthermore, plate P2 has a flaring 25 at its through-hole A2, provided in order to prevent granules from being crushed, and thus broken as blade 4 is caused to move to a closing position above hole A2. Even when blade 4 is at its full closing position, a thin interspace 26 is delimited (Fig. 7) between edge 14 of the blade and wall 10 of seat 3 above flaring 25. Such an interspace is small enough to ensure that the flow is blocked or obstructed, and wide enough to prevent any granules trapped therein from being crushed.

The force required to drive the blade is small compared with that required by conventional blades displaced with a linear reciprocating stroke, owing to the presence of lever or appendix 22 having a driving arm equal to the distance between the rotation pin 5 and the handle 22, counteracted by a resisting arm equal to the distance between the centre of the semicircular protruding portion 15, and the rotation pin 5. The ratio of the driving arm (distance between appendix 22 and pin 5), to the resisting arm (distance between the center of portion 15 and pin 5) is significantly greater than that found in conventional gate-type devices, and provides a favourable mechanism amplifying the applied force.

Plate P1 is preferably located above plate P2, but it could also be located underneath it, in which case the flaring 25 is provided in hole A1.

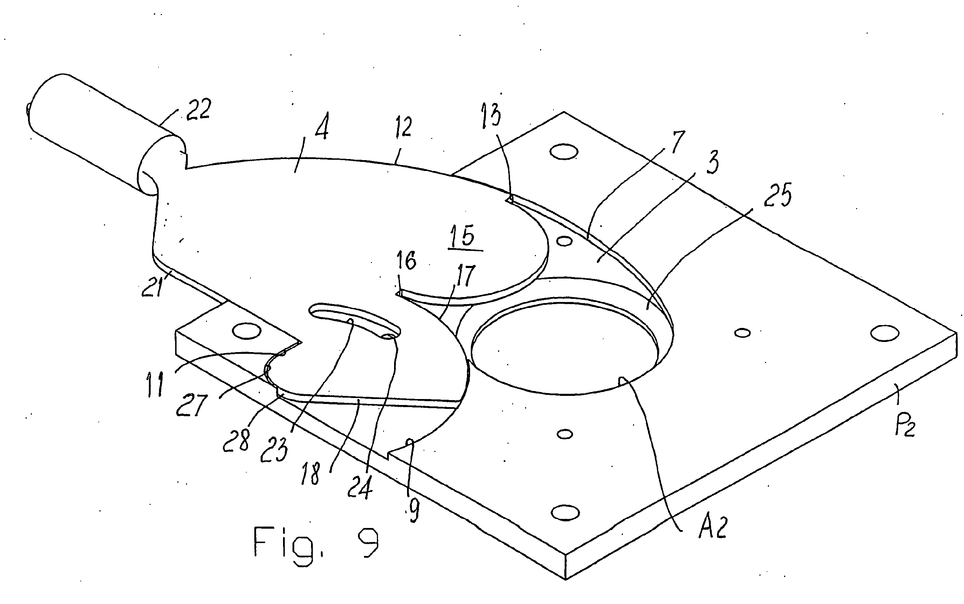

A simplified structural variation of a gate-type checking device according to the invention is shown in Fig. 9, that differs in that the wall portion 11 of seat 3 has a curved end 27 at which a curved profile 28 interconnecting between the rectilinear portions 19 and 20 of blade 4 can be concentrically rotated.

Profiles 27 and 28 are concentric with respect to each other, and have edge profiles 7, 12 and 9, 17. This feature makes it possible for the gate 4 to be guided by such profiles when being angularly displaced in an oscillating fashion, thereby making pin 5 and hole 8 unnecessary.

The invention as described above is susceptible to numerous modifications and variations within the scope thereof as defined by the claims.

Materials as well as sizes can be various according to the specific requirements.

Any reference sign following technical features in any claim has been provided to increase intelligibility of the claim and shall not be construed as limiting the scope of the claim.

## Claims

1. A gate-type checking device for granular plastics material, which has a pair of plate-like elements (P1, P2), each having a through opening (A1, A2), fixing means for keeping said plate-like elements in contact with one another at one matching face thereof, whereby their respective through openings being in alignment with each other, a receiving seat (3) formed in at least one of said plate-like elements (P1, P2) at its face matching with the other plate-like element, and at its through opening (A1, A2), a gate-type member (4) designed to be arranged in said receiving seat (3), and articulation means (5, 6) having its center of articulation located between at least one of said plate-like elements (A1, A2) and said gate-like member (4), so that said gate-type member (4) is designed to be angularly displaced, in use, between a closing position, at which it obstructs said through openings (A1, A2), and an opening position far from said openings (A1, A2), **characterized in that** said receiving seat (3) and said gate-type member (4)
- delimit an interspace (26) therebetween when said gate-type member (4) is in its closing position, said gap (26) being small enough to ensure that the flow of granular material is blocked, and wide enough to prevent any granules trapped therein from being crushed, and
- have a profile comprising at least two circular portions (7, 9; 12, 17) having its center at said articulation means (5, 6), circular portion (12) being arranged to slide close to said circular portion (7), whereas said circular portion (17) is arranged to slide close to said circular portion (9), said circular portions (12,17) of said gate-type member (4) having
- a semicircular lobe or portion (15) therebetween which is designed to obstruct said through openings (A1, A2) provided in said plates when said gate-type member (4) is in its closing position,
- a step (13) provided between circular portion (12) and a semicircular portion (14) in said gate-type member (4), and
- a shoulder (16) provided between said circular shaped portions (12, 17),
thereby sweeping away, in use, any clustering of granular material when said gate-like member (4) is angularly displaced to its closing position.

2. A device according to claim 1, **characterized in that** one of said plate-like elements (P1 or P2) arranged underneatti the other plate-like element (P2 or P1) has a flaring (25) at its through-hole (A2) arranged underneath said interspace (26).

## Patentansprüche

1. Ein Absperrschieber für Kunststoffgranulat, mit einem Paar scheibenförmiger Elemente (P1, P2) von denen jedes eine durchgehende Öffnung (A1, A2) aufweist, Befestigungsmittel zum Inkontakthalten der scheibenförmigen Elemente miteinander an ihrer zusammengehörigen Seite, wobei die Durchgangsöffnungen aneinander ausgerichtet sind, einen Aufnahmesitz (3), der in mindestens einem der scheibenförmigen Elemente (P1, P2) an der Seite, die mit dem anderen scheibenförmigen Element zusammengehört, ausgebildet ist, wobei an der Durchgangsöffnung (A1, A2) ein schieberartiges Glied (4) ausgebildet ist, um in dem Aufnahmesitz (3) angeordnet zu werden, und eine Gelenkeinrichtung (5, 6), deren Gelenkmittelpunkt zwischen zumindest einem der scheibenförmigen Elemente (A1, A2) und dem schieberartigen Glied (4) ist, so dass das schieberartige Glied (4) ausgebildet ist, so dass es im Gebrauch zwischen einer geschlossenen Position, bei der es die Durchgangsöffnungen (A1, A2) versperrt, und einer offenen Position beabstandet von den Öffnungen (A1, A2) winklig versetzt werden kann, **dadurch gekennzeichnet, dass** der Aufnahmesitz (3) und das schieberartige Glied (4)
- zwischen sich einen Zwischenraum (26) abgrenzen, wenn das schieberartige Glied (4) in seiner geschlossenen Position ist, wobei der Spalt (26) gering genug ist, um sicherzustellen, dass der Granulatfluss blockiert ist, und weit genug, um zu verhindern, dass darin eingeschlossene Granulate zerdrückt werden, und
- ein Profil mit zumindest zwei kreisförmigen Abschnitten (7, 9; 12, 17) aufweisen, deren Zentrum an der Gelenkeinrichtung (5, 6) ist, wobei der kreisförmige Abschnitt (12) derart angeordnet ist, dass er nahe dem kreisförmigen Abschnitt (7) gleitet, wohingegen der kreisförmige Abschnitt (17) angeordnet ist, sodass er nahe dem kreisförmigen Abschnitt (9) gleitet, wobei die kreisförmigen Abschnitte (12, 17) des schieberartigen Glieds (4) aufweisen
- einen halbkreisförmigen Flügel bzw. Abschnitt (15) der zwischen ihnen angeordnet ist, der ausgebildet ist, die Durchgangsöffnungen (A1, A2) zu versperren, die in den Scheiben vorgesehen sind, wenn sich das schieberartige Glied (4) in seiner geschlossenen Position befindet,
- eine Stufe (13) die zwischen dem kreisförmigen Abschnitt (12) und dem halbkreisförmigen Abschnitt (14) in dem schieberartigen Glied (4) vorgesehen ist, und
- einer Schulter (16) die zwischen den kreisförmigen Abschnitten (12, 17) vorgesehen ist,
wobei in Gebrauch Ansammlung von Granulat weggefegt wird, wenn das schieberartige Glied (4) winklig zu seiner geschlossenen Position versetzt ist.

2. Vorrichtung nach Anspruch 1, **dadurch gekennzeichnet, dass** eines der scheibenförmigen Elemente (P1 oder P2), das unterhalb des anderen scheibenförmigen Elements (P2 oder P1) angeordnet ist, eine Erweiterung (25) an seiner Durchgangsöffnung (A2) aufweist, die unterhalb des Zwischenraums (26) angeordnet ist.

## Revendications

1. Vanne d'arrêt pour matière plastique granulaire, qui présente une paire d'éléments en forme de plaque (P1, P2), chacun présentant une ouverture de passage (A1, A2), des moyens de fixation destinés à maintenir lesdits éléments en forme de plaque en contact les uns avec les autres au niveau d'une de leur face de correspondance, leurs ouvertures de passage respectives étant alignées les unes sur les autres, un siège de réception (3) formé dans au moins un desdits éléments en forme de plaque (P1, P2) au niveau de sa face correspondant avec l'autre élément en forme de plaque, et au niveau de son ouverture de passage (A1, A2), un élément d'arrêt (4) conçu pour être agencé dans ledit siège de réception (3), et des moyens d'articulation (5, 6) présentant leur centre d'articulation placé entre au moins un desdits éléments en forme de plaque (A1, A2) et ledit élément d'arrêt (4), de sorte que ledit élément d'arrêt (4) soit conçu pour être déplacé de manière angulaire, à l'utilisation, entre une position de fermeture, au niveau de laquelle il bouche lesdits ouvertures de passage (A1, A2) et une position d'ouverture distante desdites ouvertures (A1, A2), **caractérisée en ce que** ledit siège de réception (3) et ledit élément d'arrêt (4)
- délimitent un intervalle (26) entre ceux-ci lorsque ledit élément d'arrêt (4) se trouve dans sa position de fermeture, ledit intervalle (26) étant suffisamment petit pour garantir que l'écoulement de matière granulaire soit bloqué, et suffisamment large pour empêcher tout granulé capturé à l'intérieur de celui-ci d'être broyé, et
- présentent un profilé comprenant au moins deux parties circulaires (7, 9 ; 12, 17) présentant son centre au niveau desdits moyens d'articulation (5, 6), une partie circulaire (12) étant agencée pour glisser à proximité de ladite partie circulaire (7), tandis que ladite partie circulaire (17) est agencée pour glisser à proximité de ladite partie circulaire (9), lesdites parties circulaires (12, 17) dudit élément d'arrêt (4) présentant
- un lobe ou une partie semi-circulaire (15) entre celles-ci, qui est conçu(e) pour boucher lesdites ouvertures de passage (A1, A2) prévues dans lesdites plaques lorsque ledit élément d'arrêt (4) se trouve dans sa position de fermeture,
- un gradin (13) prévu entre la partie circulaire (12) et une partie semi-circulaire (14) dans ledit élément d'arrêt (4), et
- un épaulement (16) prévu entre lesdites parties de forme circulaire (12, 17),
empêchant de ce fait, à l'utilisation, tout regroupement de matière granulaire lorsque ledit élément d'arrêt (4) est déplacé de manière angulaire vers sa position de fermeture.

2. Vanne selon la revendication 1, **caractérisée en ce qu'**un desdits éléments en forme de plaque (P1 ou P2) agencé au-dessous de l'autre élément en forme de plaque (P2 ou P1) présente un évasement (25) au niveau de son trou de passage (A2) agencé au-dessous dudit intervalle (26).
